# EUROPEAN PATENT APPLICATION

(11) **EP 4 782 230 A1**
(43) Date of publication of application: **29.07.2026**
(21) Application number: 23957493.2
(22) Date of filing: 13.12.2023
(51) Int. Cl.: B60G 11/26, B60G 11/30, B60G 17/056

(54) **HYDRO-PNEUMATIC SUSPENSION SYSTEM AND VEHICLE**

(30) Priority: 02.11.2023 CN 202311454126
(71) Applicant: Xuzhou Heavy Machinery Co., Ltd., Xuzhou, Jiangsu 221004 (CN)
(72) Inventor: CHEN, Xiangdong, Xuzhou, Jiangsu 221004 (CN); DING, Honggang, Xuzhou, Jiangsu 221004 (CN); LIU, Baoluan, Xuzhou, Jiangsu 221004 (CN); MA, Yunwang, Xuzhou, Jiangsu 221004 (CN); YU, Zhongtai, Xuzhou, Jiangsu 221004 (CN); MA, Fei, Xuzhou, Jiangsu 221004 (CN); ZHANG, Heng, Xuzhou, Jiangsu 221004 (CN); ZHAO, Huipeng, Xuzhou, Jiangsu 221004 (CN)
(74) Representative: Bayramoglu et al.
(86) International application number: PCT/CN2023/138422
(87) International publication number: WO 2025/091640

(57) **Abstract**

A hydropneumatic suspension system includes an oil pump (1), a hydraulic tank, a suspension cylinder (1-3), a lifting directional valve (4), a lowering directional valve (5), an elastic-rigid switching valve (7), and an overall lifting directional valve (3) that are symmetrically arranged on two sides of an axle; a P-port of the lifting directional valve (4) and a P-port of the overall lifting directional valve (3) are connected to a pressure line of the hydropneumatic suspension system separately, and another port of the lifting directional valve (4) is connected to a rodless chamber of the suspension cylinder (1-3); another port of the overall lifting directional valve (3) is connected to a rod chamber of the suspension cylinder (1-3); a T-port of the lowering directional valve (5) is connected to the hydraulic tank, and another port of the lowering directional valve (5) is connected to the rodless chamber of the suspension cylinder (1-3). Further, a vehicle is disclosed. The hydropneumatic suspension system not only enables simultaneous lifting and lowering of the cylinders on one side or both sides of the vehicle body, and overall lifting of all axles within one suspension group in an outrigger-supported state, but also enables lifting of a single axle so that the vehicle can travel with one less axle as well as lifting of a single axle in an outrigger-supported state.

## Description

### TECHNICAL FIELD

This application relates to the technical field of engineering vehicles, particularly relates to a hydropneumatic suspension system and a vehicle, and more specifically, to a hydropneumatic suspension system and a multi-axle crane equipped with the hydropneumatic suspension system.

### BACKGROUND

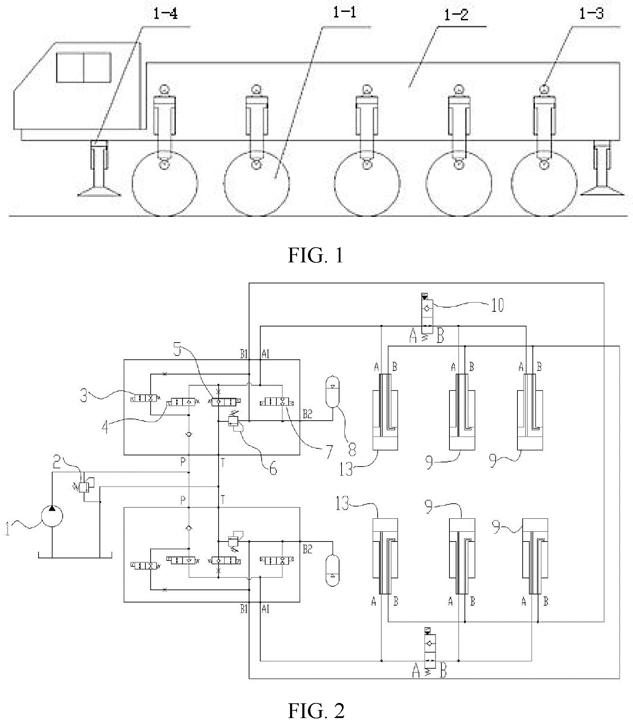

Some multi-axle engineering vehicles, especially all-terrain wheeled cranes, are equipped with a hydropneumatic suspension system. The hydropneumatic suspension system is typically located between a vehicle body 1-2 and an axle 1-1, and includes a suspension cylinder 1-3, a suspension valve block, an accumulator, an oil pump, an oil tank, and the like. An upper hinge point of the suspension cylinder 1-3 is connected to the vehicle body 1-2, and a lower hinge point is connected to the axle 1-1. The axle 1-1 supports the suspension cylinder 1-3. The suspension cylinder 1-3 supports the vehicle body 1-2 using hydraulic fluid as a force transmission medium. The vehicle body 1-2 in turn carries components such as a cab, an engine, and a boom. As shown in FIG. 1, most cranes are further provided with outriggers 1-4 on the vehicle body 1-2.

An oil port of the suspension cylinder 1-3 is connected to the accumulator, so as to mitigate and dampen impacts and vibrations caused by the ground. The suspension cylinder 1-3 is connected to other hydraulic components such as the suspension valve block, oil pump, and oil tank. The extension and retraction of the suspension cylinder can be controlled by the suspension valve block, thereby controlling the lifting and lowering of the vehicle body 1-2 and the load on the crane.

When the vehicle is running without load, an intermediate axle may be lifted to reduce resistance and tire wear. When the vehicle is running under a heavy load, the intermediate axle is lowered to support the vehicle body 1-2 and share the load of other axles, thereby preventing an excessive load on the axle 1-1. When the vehicle body 1-2 of an all-wheel steering vehicle is relatively long, the last axle may be lifted so that the original penultimate axle becomes the last axle. When the original penultimate axle is steered at the same steering angle as the original last axle, a minimum turning radius of the vehicle can be significantly reduced, making it easier for the vehicle to pass through narrow areas. Based on these two requirements, it is necessary to develop an axle lifting-and-lowering function (the axle lifting-and-lowering function means the capability of an engineering vehicle to lift, raise, and lower an axle) for lifting individual axles in a multi-axle hydropneumatic suspension system.

Considering factors such as balancing axle loads and improving vehicle handling, the hydropneumatic suspension system of a multi-axle vehicle is generally divided into a front suspension group and a rear suspension group. For example, in a five-axle all-terrain crane, the first two axles (the first axle and the second axle) form one group, and the last three axles (the third, fourth, and fifth axles) form another group. In most cases, the rodless chambers of the suspension cylinders 1-3 on the same side of all axles in each suspension group communicate with each other, and the rod chambers communicate with each other, and then the rodless chambers communicate with the rod chambers of the suspension cylinders 1-3 on the opposite side. This not only balances the left and right axle loads, but also increases the anti-roll capability of the vehicle.

When the vehicle is running under a light load, the third axle in a five-axle vehicle may be lifted, allowing the vehicle to travel with one less axle. When the vehicle is traveling to reduce the turning radius, the last axle (the fifth axle) may be lifted, also enabling traveling with one less axle.

Utility model patent CN203655745U discloses a hydropneumatic suspension hydraulic system and an engineering vehicle. The hydropneumatic suspension system can raise or lower the vehicle body on a single side or on both sides simultaneously: when a second switching valve is energized, oil enters the rodless chamber of the cylinder and the vehicle body is lifted; when both the second switching valve and the first switching valve are energized simultaneously, the cylinder extends out differentially, enabling rapid lifting of the vehicle body; when a third switching valve is energized, the rodless chamber communicates with a T-port, that is, communicates with the oil tank, and the vehicle body descends under gravity; when the first switching valve and the third switching valve are energized simultaneously, pressure oil enters the rod chamber of the cylinder, so that the vehicle body can descend without relying on gravity. When a vehicle equipped with outriggers is in an outrigger-supported state, if the first switching valve and the third switching valve are energized simultaneously, all axles within one suspension group can be lifted as a whole.

Invention patent application CN 115159350 A discloses a hydropneumatic suspension control valve and a hydropneumatic suspension hydraulic control system, in which the system can also raise or lower the vehicle body on one side or on both sides simultaneously. In the case that a vehicle equipped with outriggers is in an outrigger-supported state, when a left-axle lifting valve and a right-axle lifting valve are energized simultaneously, pressure oil enters the rod chambers while the rodless chambers are connected to the return line, thereby enabling lifting of all axles as a whole within one suspension group.

Although all the above technical solutions can, under the condition that the vehicle is supported by outriggers, achieve simultaneous extension or retraction of all cylinders on one side or both sides of one group of axles, thereby implementing the function of overall lifting of all axles within one suspension group, the technical solutions are unable to implement lifting of a single axle within one suspension group when the vehicle is supported by outriggers. Moreover, when the outriggers are off the ground or when the vehicle is supported by the axles without outriggers, the above technical solutions are also unable to implement lifting of a single axle, and unable to implement traveling with one less axle.

### SUMMARY

In view of the fact that in the prior art, a single axle in a multi-axle hydropneumatic suspension vehicle is unable to be lifted in a single suspension group, this application provides a hydropneumatic suspension system and a vehicle to not only implement simultaneous lifting and lowering of cylinders on one side or both sides of the vehicle body, but also implement overall lifting of the axle in a suspension group in an outrigger-supported state.

To achieve the above objective, this application puts forward the following technical solutions:

According to a first aspect, this application discloses a hydropneumatic suspension system, including an oil pump and a hydraulic tank, and further including a suspension cylinder, a lifting directional valve, a lowering directional valve, an elastic-rigid switching valve, and an overall lifting directional valve that are symmetrically arranged on two sides of an axle; a P-port of the lifting directional valve and a P-port of the overall lifting directional valve are connected to a pressure line of the hydropneumatic suspension system separately, and another port of the lifting directional valve is connected to a rodless chamber of the suspension cylinder; another port of the overall lifting directional valve is connected to a rod chamber of the suspension cylinder; a T-port of the lowering directional valve is connected to the hydraulic tank, and another port of the lowering directional valve is connected to the rodless chamber of the suspension cylinder; the elastic-rigid switching valves are connected to a rodless chamber of the suspension cylinder on one side and a rod chamber of the suspension cylinder on the opposite side respectively; the lifting directional valve is configured to control communication between the rodless chamber of the suspension cylinder and the oil pump, and when the lifting directional valve is energized, all suspension cylinders on the same side are extended; the lowering directional valve is configured to control communication between the rodless chamber of the suspension cylinder and the hydraulic tank, and when the lowering directional valve is energized, all suspension cylinders on the same side are retracted; and when the lifting directional valves or the lowering directional valves on both sides are energized simultaneously, an entire vehicle body is lifted or lowered.

With reference to the first aspect, further, the hydropneumatic suspension system of this application further includes 2 through-flow directional valves that are symmetrically arranged on two sides of an axle; the suspension cylinder includes a liftable-axle suspension cylinder and a non-liftable-axle suspension cylinder; a corresponding axle connected to the liftable-axle suspension cylinder is able to be lifted and lowered when a corresponding axle connected to the non-liftable-axle suspension cylinder remains stationary; and the through-flow directional valve is disposed on a communication line between the rodless chamber of the liftable-axle suspension cylinder and the rodless chamber of the non-liftable-axle suspension cylinder, and is configured to block the rodless chamber of the non-liftable-axle suspension cylinder.

When the through-flow directional valve is in a two-way communication state, the lifting directional valve in the hydropneumatic suspension system is energized, thereby implementing simultaneous extension of cylinders on one side or both sides of the vehicle body; the lowering directional valve is energized, thereby implementing simultaneous retraction of cylinders on one side or both sides of the vehicle body.

When the through-flow directional valve is in a two-way communication state, the overall lifting directional valve and the lowering directional valve in the hydropneumatic suspension system are both energized to establish communication, thereby implementing overall lifting of all axles within one suspension group in an outrigger-supported state; the overall lifting directional valve and the lifting directional valve in the system are both energized to establish communication, thereby implementing overall lowering of all axles within one suspension group in an outrigger-supported state.

When the through-flow directional valve is in a one-way shutoff state and the elastic-rigid switching valve is in a two-way shutoff state, the overall lifting directional valve and the lowering directional valve in the hydropneumatic suspension system are both energized to establish communication, thereby enabling a single axle to be lifted so that the vehicle travels with one less axle.

When the through-flow directional valve is in a one-way shutoff state, the overall lifting directional valve and the lowering directional valve are both energized to establish communication, thereby lifting a single axle in an outrigger-supported state.

According to a second aspect, this application discloses a hydropneumatic suspension system, including an oil pump and a hydraulic tank, and further including a suspension cylinder, a lifting directional valve, a lowering directional valve, an elastic-rigid switching valve, a lifting-lowering directional valve, and a pilot-operated check valve that are symmetrically arranged on two sides of an axle; a P-port of the lifting directional valve and a P-port of the lifting-lowering directional valve are connected to a pressure line of the hydropneumatic suspension system separately, and another port of the lifting directional valve is connected to a rodless chamber of the suspension cylinder; a T-port of the lowering directional valve is connected to the hydraulic tank, and another port of the lowering directional valve is connected to the rodless chamber of the suspension cylinder; the elastic-rigid switching valves are connected to a rodless chamber of the suspension cylinder on one side and a rod chamber of the suspension cylinder on the opposite side respectively; a T-port of the lifting-lowering directional valve is connected to the hydraulic tank; 2 pilot-operated check valves are provided and connected in parallel, and the 2 parallel-connected pilot-operated check valves are connected in series between the rod chamber of each suspension cylinder and the lifting-lowering directional valve and share a common pilot line; the lifting directional valve is configured to control communication between the rodless chamber of the suspension cylinder and the oil pump, and when the lifting directional valve is energized, all suspension cylinders on the same side are extended; the lowering directional valve is configured to control communication between the rodless chamber of the suspension cylinder and the hydraulic tank, and when the lowering directional valve is energized, all suspension cylinders on the same side are retracted; and when the lifting directional valves or the lowering directional valves on both sides are energized simultaneously, an entire vehicle body is lifted or lowered.

With reference to the second aspect, further, the hydropneumatic suspension system of this application further includes 2 through-flow directional valves that are symmetrically arranged on two sides of an axle; the suspension cylinder includes a liftable-axle suspension cylinder and a non-liftable-axle suspension cylinder; a corresponding axle connected to the liftable-axle suspension cylinder is able to be lifted and lowered when a corresponding axle connected to the non-liftable-axle suspension cylinder remains stationary; and the through-flow directional valve is disposed on a communication line between the rodless chamber of the liftable-axle suspension cylinder and the rodless chamber of the non-liftable-axle suspension cylinder, and is configured to block the rodless chamber of the non-liftable-axle suspension cylinder.

When the through-flow directional valve is in a two-way communication state, the lifting directional valve in the hydropneumatic suspension system is energized, thereby implementing simultaneous extension of cylinders on one side or both sides of the vehicle body; the lowering directional valve is energized, thereby implementing simultaneous retraction of cylinders on one side or both sides of the vehicle body.

When the through-flow directional valve is in a two-way communication state, the overall lifting directional valve and the lowering directional valve in the hydropneumatic suspension system are both energized to establish communication, thereby implementing overall lifting of all axles within one suspension group in an outrigger-supported state; the overall lifting directional valve and the lifting directional valve in the system are both energized to establish communication, thereby implementing overall lowering of all axles within one suspension group in an outrigger-supported state.

When the through-flow directional valve is in a one-way shutoff state and the elastic-rigid switching valve is in a two-way shutoff state, the lifting-lowering directional valve in the hydropneumatic suspension system is energized and shifted to a lower position, and the lowering directional valve is energized to establish communication, thereby enabling a single axle to be lifted so that the vehicle travels with one less axle.

When the through-flow directional valve is in a one-way shutoff state, the lifting-lowering directional valve is energized and shifted to a lower position, and the lowering directional valve is energized to establish communication, thereby lifting a single axle in an outrigger-supported state.

With reference to the first aspect or the second aspect, further, the hydropneumatic suspension system of this application further includes a first relief valve. An inlet of the first relief valve is connected to an outlet of the oil pump, and the outlet is connected to the hydraulic tank and is configured to stabilize pressure of the hydropneumatic suspension system.

With reference to the first aspect or the second aspect, further, the hydropneumatic suspension system of this application further includes 2 second relief valves that are symmetrically arranged on two sides of the axle. The second relief valve on each side is disposed between the T-port of the lowering directional valve on that side and the accumulator on that side, and is configured to provide overpressure protection for a fluid chamber of the accumulator on that side.

With reference to the first aspect or the second aspect, further, the hydropneumatic suspension system of this application further includes 2 accumulators that are symmetrically arranged on two sides of the axle. The accumulator on each side is continuously connected to the rod chamber of the suspension cylinder on the opposite side, and is primarily configured to absorb vibration transmitted from the road surface to the suspension system and mitigate pressure shocks, so as to provide damping and protect the suspension system and enhance the comfort of the cab and the reliability of the suspension system. Additionally, when an axle is lifted off the ground, the accumulator is configured to maintain pressure to keep the axle lifted.

With reference to the first aspect or the second aspect, further, the through-flow directional valve is a high-flow, two-position, two-way directional valve with one-way shutoff when de-energized, specifically a two-position two-way air-operated directional valve, a two-position two-way pilot-operated directional valve, or a two-position two-way solenoid-operated directional valve.

With reference to the first aspect or the second aspect, further, the lifting directional valve and the lowering directional valve are two-position two-way solenoid-operated directional valves with either one-way or two-way shutoff, and the elastic-rigid switching valve is a two-position two-way air-operated directional valve with two-way shutoff. Preferably, the lifting directional valve and the lowering directional valve are two-position two-way solenoid-operated directional valves with one-way shutoff when de-energized.

With reference to first aspect, further, the overall lifting directional valve is a two-position two-way solenoid-operated directional valve with two-way shutoff when de-energized.

With reference to the second aspect, further, the lifting-lowering directional valve is a three-position four-way directional valve with a center-Y function, and preferably a three-position four-way solenoid-operated directional valve.

With reference to the second aspect, further, the pilot-operated check valve may be replaced with a solenoid-operated directional valve, an air-operated valve, or a solenoid-operated directional valve with one-way shutoff, or may be replaced with a solenoid-operated directional valve with two-way shutoff.

According to a third aspect, a vehicle is provided. The vehicle includes the hydropneumatic suspension system.

Compared with the prior art, the hydropneumatic suspension system and the vehicle provided in this application achieves at least the following beneficial effects:

(1) The hydropneumatic suspension system of this application not only implements simultaneous lifting and lowering of cylinders on one side or both sides of the vehicle body, but also implement overall lifting of the axle in a suspension group in an outrigger-supported state.

(2) The hydropneumatic suspension system of this application further enables lifting of a single axle so that the vehicle can travel with one less axle, and also allows lifting of a single axle in an outrigger-supported state, thereby meeting user requirements for lifting and lowering individual axles, and improving product satisfaction.

(3) The hydropneumatic suspension system of this application implements function of lifting and lowering axles through the lifting-lowering directional valve or the overall lifting directional valve by utilizing liftable-axle cylinders. Additionally, the hydropneumatic suspension system of this application employs a universal control valve for all control functions, thereby providing high versatility, ease of implementation, and significant cost-effectiveness.

(4) The vehicle of this application can implement the function of lifting and lowering axles through the hydropneumatic suspension system of this application.

### BRIEF DESCRIPTION OF DRAWINGS

FIG. 1 is a schematic structural diagram of a vehicle in the prior art;
FIG. 2 is a schematic structural diagram of a hydropneumatic suspension system according to Embodiment 1 of this application;
FIG. 3 is a schematic structural diagram of a hydropneumatic suspension system according to Embodiment 2 of this application; and
FIG. 4 is a schematic structural diagram of a hydropneumatic suspension system according to Embodiment 3 of this application.

### List of reference signs:

1-1. axle; 1-2. vehicle body; 1-3. suspension cylinder; 1-4. outrigger; 1-oil pump; 2-first relief valve; 3-overall lifting directional valve; 4-lifting directional valve; 5-lowering directional valve; 6-second relief valve; 7-elastic-rigid switching valve; 8-accumulator; 9-non-liftable-axle suspension cylinder; 10-through-flow directional valve; 11-pilot-operated check valve; 12-lifting-lowering directional valve; 13-liftable-axle suspension cylinder.

### DETAILED DESCRIPTION

The following clearly describes the technical solutions in the embodiments of the present invention in full with reference to the accompanying drawings in the embodiments of the present invention. Apparently, the described embodiments are merely some of but not all of the embodiments of the present invention. All other embodiments derived by a person of ordinary skill in the art based on the embodiments of the present invention without making any creative efforts fall within the protection scope of the present invention.

Unless otherwise expressly specified, the relative arrangement of parts and steps, numerical expressions, and numerical values set forth in the embodiments do not limit the scope of this application. Understandably, for ease of description, the sizes of various parts shown in the drawings are not drawn to actual scale. The technologies, methods, and devices known to a person of ordinary skill in the related art may be described without going into details, but as appropriate, such technologies, methods, and device are regarded as a part of the specification. In all the examples shown and discussed herein, any specific values are construed as merely exemplary rather than restrictive. Therefore, values in other examples in an exemplary embodiment may be different. It is noted that similar reference numerals and letters indicate similar items in the following drawings. Therefore, once an item is defined in one drawing, the item does not need to be further discussed in subsequent drawings.

Understandably, in the context of this application, a direction or a positional relationship indicated by the terms such as "center", "transverse", "upper", "lower", "left", "right", "vertical", "horizontal", "top", "bottom", "inner", and "outer" is a direction or positional relationship based on the illustration in the drawings, and is merely intended for ease or brevity of description of this application, but does not indicate or imply that the indicated device or component must be located in the specified direction or constructed or operated in the specified direction. Therefore, such terms are not to be understood as a limitation on the protection scope of this application.

The technical solutions of this application are described using an example of a hydraulic suspension system in which last three axles of a five-axle vehicle form one group. It is noted that this application is equally applicable to multi-axle vehicles with other numbers of axles.

### Embodiment 1

As shown in FIG. 2, this application discloses a hydropneumatic suspension system, including an oil pump 1 and a hydraulic tank, and further including a suspension cylinder, a lifting directional valve 4, a lowering directional valve 5, an elastic-rigid switching valve 7, and an overall lifting directional valve 3 that are symmetrically arranged on two sides of an axle. A P-port of the lifting directional valve 4 and a P-port of the overall lifting directional valve 3 are connected to a pressure line of the hydropneumatic suspension system separately, and another port of the lifting directional valve 4 is connected to a rodless chamber of the suspension cylinder; and another port of the overall lifting directional valve 3 is connected to a rod chamber of the suspension cylinder. A T-port of the lowering directional valve 5 is connected to the hydraulic tank, and another port of the lowering directional valve 5 is connected to the rodless chamber of the suspension cylinder. The elastic-rigid switching valves 7 are connected to a rodless chamber of the suspension cylinder on one side and a rod chamber of the suspension cylinder on the opposite side respectively. The lifting directional valve 4 is configured to control communication between the rodless chamber of the suspension cylinder and the oil pump 1. When the lifting directional valve 4 is energized, all suspension cylinders on the same side are extended. The lowering directional valve 5 is configured to control communication between the rodless chamber of the suspension cylinder and the hydraulic tank. When the lowering directional valve 5 is energized, all suspension cylinders on the same side are retracted. When the lifting directional valves 4 or the lowering directional valves 5 on both sides are energized simultaneously, the entire vehicle body is lifted or lowered.

In FIG. 1, A, B, P, T, A1, B1, and B2 are all reference signs of valve block ports. The letters A and B near each suspension cylinder also reference signs of cylinder ports.

In this embodiment, the hydropneumatic suspension system can simultaneously lift or lower the vehicle body on one side or both sides. The specific control method is as follows:

When the vehicle does not require individually extending or retracting one or more suspension cylinders, the through-flow directional valve 10 remains in a de-energized, communicating position. At this time, if the lifting directional control valve 4 is energized, all suspension cylinders on the same side are extended; if the lowering directional valve 5 is energized instead, all suspension cylinders on the same side are retracted. When the lifting directional valves 4 or the lowering directional control valves 5 on both sides are energized simultaneously, overall lifting or lowering of the vehicle body is implemented.

For a vehicle equipped with outriggers, when the vehicle is supported by the outriggers, when the overall lifting directional valve 3 and the lowering directional valve 5 are energized simultaneously, the pressure oil enters the rod chambers of all suspension cylinders, and the rodless chambers are connected to the return line, thereby implementing overall lifting of the axles.

In a specific implementation of this embodiment, the hydropneumatic suspension system of this application further includes 2 through-flow directional valves 10 that are symmetrically arranged on two sides of an axle. The suspension cylinder includes a liftable-axle suspension cylinder 13 and a non-liftable-axle suspension cylinder 9. A corresponding axle connected to the liftable-axle suspension cylinder 13 is able to be lifted and lowered when a corresponding axle connected to the non-liftable-axle suspension cylinder 9 remains stationary. The through-flow directional valve 10 is disposed on a communication line between the rodless chamber of the liftable-axle suspension cylinder 13 and the rodless chamber of the non-liftable-axle suspension cylinder 9, and is configured to block the rodless chamber of the non-liftable-axle suspension cylinder 9.

When the through-flow directional valve 10 is in a two-way communication state, the lifting directional valve 4 in the hydropneumatic suspension system is energized, thereby implementing simultaneous extension of cylinders on one side or both sides of the vehicle body; the lowering directional valve 5 is energized, thereby implementing simultaneous retraction of cylinders on one side or both sides of the vehicle body.

When the through-flow directional valve 10 is in a two-way communication state, the overall lifting directional valve 3 and the lowering directional valve 5 in the hydropneumatic suspension system are both energized to establish communication, thereby implementing overall lifting of all axles within one suspension group in an outrigger-supported state; the overall lifting directional valve 3 and the lifting directional valve 4 in the system are both energized to establish communication, thereby implementing overall lowering of all axles within one suspension group in an outrigger-supported state.

When the through-flow directional valve 10 is in a one-way shutoff state and the elastic-rigid switching valve 7 is in a two-way shutoff state, the overall lifting directional valve 3 and the lowering directional valve 5 in the hydropneumatic suspension system are both energized to establish communication, thereby enabling a single axle to be lifted so that the vehicle travels with one less axle.

When the through-flow directional valve 10 is in a one-way shutoff state, the overall lifting directional valve 3 and the lowering directional valve 5 are both energized to establish communication, thereby lifting a single axle in an outrigger-supported state.

A vehicle containing the hydropneumatic suspension system of this application enables lifting of a single axle so that the vehicle can travel with one less axle, and also allows lifting of a single axle in an outrigger-supported state. The specific control method is as follows:

When the vehicle needs to lift a single axle, first, the through-flow directional valve 10 is energized to be in an upper position. This causes the rodless chamber of the non-liftable-axle suspension cylinder 9 to be closed, and disconnects the rodless chamber of the non-liftable-axle suspension cylinder 9 from the rodless chamber of the liftable-axle suspension cylinder 13, and also from the suspension lifting-lowering oil line. Further, this causes the lowering directional valve 5 to be energized and causes the spool to be in a communicating position, allowing the rodless chamber of the liftable-axle suspension cylinder 13 to communicate with the hydraulic tank. Finally, the overall lifting directional valve 3 is shifted to the communicating position. The pressure oil provided by the oil pump 1 flows through the overall lifting directional valve 3 into the rod chambers of all suspension cylinders. At the same time, the elastic-rigid switching valve 7 switches to the shutoff position to prevent backflow of the pressure oil to the hydraulic tank. This causes the liftable-axle suspension cylinder 13 to retract so that the liftable axle is lifted and the tires are raised off the ground. After completion of lifting the axle, the lowering directional valve 5 and the overall lifting directional valve 3 are de-energized. To maintain the tires off the ground, the through-flow directional valve 10 needs to remain in the upper position.

When the vehicle needs to lower a lifted single axle, first, both the overall lifting directional valve 3 and the lifting directional valve 4 are energized and shifted to the communicating position. The pressure oil enters the rodless chamber of the liftable-axle suspension cylinder 13. The oil in the rod chamber of the liftable-axle suspension cylinder 13 is forced out and flows through the overall lifting directional valve 3 into the rodless chamber of the liftable-axle suspension cylinder 13 located on the opposite side. The liftable-axle suspension cylinder 13 extends smoothly, and the axle is lowered back to the ground. After the liftable axle is lowered to the ground, the through-flow directional valve 10 is shifted to the communicating position, so that the rodless chamber of the liftable-axle suspension cylinder 13 communicates with the rodless chamber of other axles on the same side, thereby completing the lowering operation.

In a specific implementation of this embodiment, the hydropneumatic suspension system of this application further includes a first relief valve 2. An inlet of the first relief valve 2 is connected to an outlet of the oil pump 1, and the outlet is connected to the hydraulic tank and is configured to stabilize pressure of the hydropneumatic suspension system.

In a specific implementation of this embodiment, the hydropneumatic suspension system of this application further includes 2 second relief valves 6 that are symmetrically arranged on two sides of the axle. The second relief valve 6 on each side is disposed between the T-port of the lowering directional valve 5 on that side and the accumulator 8 on that side, and is configured to provide overpressure protection for a fluid chamber of the accumulator 8 on that side.

In a specific implementation of this embodiment, the hydropneumatic suspension system of this application further includes 2 accumulators 8 that are symmetrically arranged on two sides of the axle. The accumulator 8 on each side is continuously connected to the rod chamber of the suspension cylinder on the opposite side, and is primarily configured to absorb vibration transmitted from the road surface to the suspension system and mitigate pressure shocks, so as to provide damping and protect the suspension system and enhance the comfort of the cab and the reliability of the suspension system. Additionally, when an axle is lifted off the ground, the accumulator is configured to maintain pressure to keep the axle lifted.

In a specific implementation of this embodiment, the through-flow directional valve 10 is a high-flow, two-position, two-way directional valve with one-way shutoff when de-energized, specifically a two-position two-way air-operated directional valve, a two-position two-way pilot-operated directional valve, or a two-position two-way solenoid-operated directional valve.

In a specific implementation of this embodiment, the lifting directional valve 4 and the lowering directional valve 5 are two-position two-way solenoid-operated directional valves with either one-way or two-way shutoff, and the elastic-rigid switching valve 7 is a two-position two-way air-operated directional valve with two-way shutoff. Preferably, the lifting directional valve 4 and the lowering directional valve 5 are two-position two-way solenoid-operated directional valves with one-way shutoff when de-energized.

In a specific implementation of this embodiment, the overall lifting directional valve 3 is a two-position two-way solenoid-operated directional valve with two-way shutoff when de-energized.

### Embodiment 2

For the vehicles in which the vehicle body is lowered by partially relying on gravity, or the vehicles that do not require an overall lifting of axles after the vehicle is supported by outriggers, the hydropneumatic suspension system does not include the overall lifting directional valve 3. In view of this situation, based on Embodiment 1, Embodiment 2 eliminates the overall lifting directional valve 3, and adds a lifting-lowering directional valve 12 and a pilot-operated check valve 11 into the pipeline. The specific technical solution is as follows:

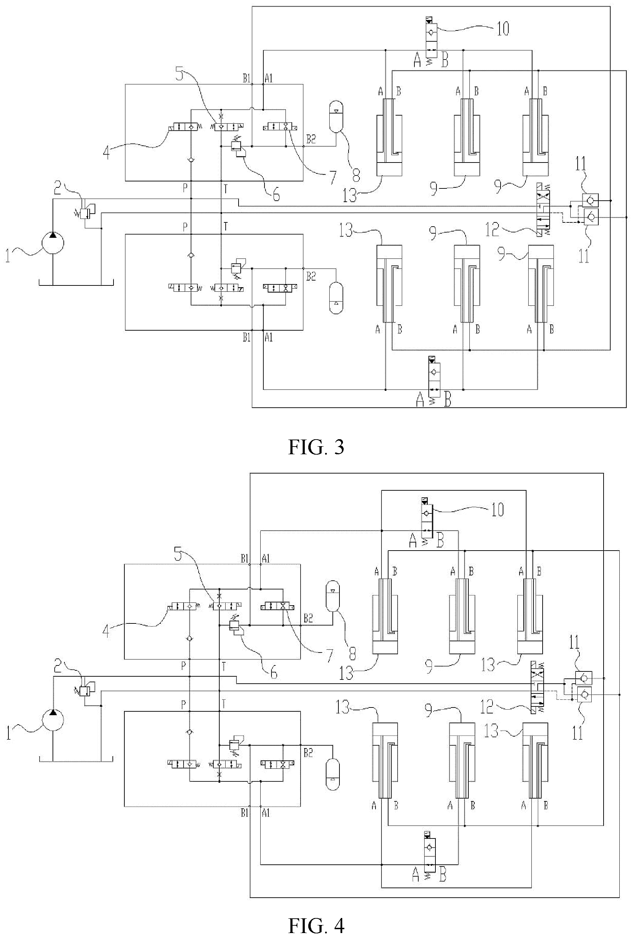

As shown in FIG. 3, this application discloses another hydropneumatic suspension system, including an oil pump 1 and a hydraulic tank, and further including a suspension cylinder, a lifting directional valve 4, a lowering directional valve 5, an elastic-rigid switching valve 7, a lifting-lowering directional valve 12, and a pilot-operated check valve 11 that are symmetrically arranged on two sides of an axle. A P-port of the lifting directional valve 4 and a P-port of the lifting-lowering directional valve 12 are connected to a pressure line of the hydropneumatic suspension system separately, and another port of the lifting directional valve 4 is connected to a rodless chamber of the suspension cylinder. A T-port of the lowering directional valve 5 is connected to the hydraulic tank, and another port of the lowering directional valve 5 is connected to the rodless chamber of the suspension cylinder. The elastic-rigid switching valves 7 are connected to a rodless chamber of the suspension cylinder on one side and a rod chamber of the suspension cylinder on the opposite side respectively. A T-port of the lifting-lowering directional valve 12 is connected to the hydraulic tank. 2 pilot-operated check valves 11 are provided and connected in parallel, and the 2 parallel-connected pilot-operated check valves 11 are connected in series between the rod chamber of each suspension cylinder and the lifting-lowering directional valve 12 and share a common pilot line. The lifting directional valve 4 is configured to control communication between the rodless chamber of the suspension cylinder and the oil pump 1. When the lifting directional valve 4 is energized, all suspension cylinders on the same side are extended; the lowering directional valve 5 is configured to control communication between the rodless chamber of the suspension cylinder and the hydraulic tank. When the lowering directional valve 5 is energized, all suspension cylinders on the same side are retracted. When the lifting directional valves 4 or the lowering directional valves 5 on both sides are energized simultaneously, an entire vehicle body is lifted or lowered.

In a specific implementation of this embodiment, a check valve is provided within the lowering directional valve 5.

In a specific implementation of this embodiment, the hydropneumatic suspension system of this application further includes 2 through-flow directional valves 10 that are symmetrically arranged on two sides of an axle. The suspension cylinder includes a liftable-axle suspension cylinder 13 and a non-liftable-axle suspension cylinder 9. A corresponding axle connected to the liftable-axle suspension cylinder 13 is able to be lifted and lowered when a corresponding axle connected to the non-liftable-axle suspension cylinder 9 remains stationary. The through-flow directional valve 10 is disposed on a communication line between the rodless chamber of the liftable-axle suspension cylinder 13 and the rodless chamber of the non-liftable-axle suspension cylinder 9, and is configured to block the rodless chamber of the non-liftable-axle suspension cylinder 9.

When the through-flow directional valve 10 is in a two-way communication state, the lifting directional valve 4 in the hydropneumatic suspension system is energized, thereby implementing simultaneous extension of cylinders on one side or both sides of the vehicle body; the lowering directional valve 5 is energized, thereby implementing simultaneous retraction of cylinders on one side or both sides of the vehicle body.

When the through-flow directional valve 10 is in a two-way communication state, the overall lifting directional valve 3 and the lowering directional valve 5 in the hydropneumatic suspension system are both energized to establish communication, thereby implementing overall lifting of all axles within one suspension group in an outrigger-supported state; the overall lifting directional valve 3 and the lifting directional valve 4 in the system are both energized to establish communication, thereby implementing overall lowering of all axles within one suspension group in an outrigger-supported state.

When the through-flow directional valve 10 is in a one-way shutoff state and the elastic-rigid switching valve 7 is in a two-way shutoff state, the lifting-lowering directional valve 12 in the hydropneumatic suspension system is energized and shifted to a lower position, and the lowering directional valve 5 is energized to establish communication, thereby enabling a single axle to be lifted so that the vehicle travels with one less axle.

When the through-flow directional valve 10 is in a one-way shutoff state, the lifting-lowering directional valve 12 is energized and shifted to a lower position, and the lowering directional valve 5 is energized to establish communication, thereby lifting a single axle in an outrigger-supported state.

In this embodiment, the hydropneumatic suspension system can simultaneously lift or lower the vehicle body on one side or both sides. The specific control method is as follows:

When the vehicle needs to lift a single axle, first, the through-flow directional valve 10 is energized to be in an upper position. This causes the rodless chamber of the non-liftable-axle suspension cylinder 9 to be closed, and disconnects the rodless chamber of the non-liftable-axle suspension cylinder 9 from the rodless chamber of the liftable-axle suspension cylinder 13, and also from the suspension lifting-lowering oil line. Further, this causes the lowering directional valve 5 to be energized and causes the spool to be in a communicating position, allowing the rodless chamber of the liftable-axle suspension cylinder 13 to communicate with the hydraulic tank. Finally, the lifting-lowering directional valve 12 is energized and shifted to the lower position. The pressure oil provided by the oil pump 1 flows through two pilot-operated check valves 11 into the rod chambers of all suspension cylinders. At the same time, the elastic-rigid switching valve 7 switches to the shutoff position to prevent backflow of the pressure oil to the hydraulic tank. This causes the liftable-axle suspension cylinder 13 to retract so that the liftable axle is lifted and the tires are raised off the ground. After completion of lifting the axle, the lowering directional valve 5 and the lifting-lowering directional valve 12 are de-energized. To maintain the vehicle off the ground, the through-flow directional valve 10 needs to remain in the upper position.

When the vehicle needs to lower a lifted single axle, the lifting-lowering directional valve 12 is energized and shifted to the upper position. The pressure oil reaches a pressure level sufficient to reversely open a pilot port of the pilot-operated check valve 11, and the pilot-operated check valve 11 is opened. At this time, the rod chamber of the liftable-axle suspension cylinder 13 is connected to the hydraulic tank. Meanwhile, the lifting directional valves 4 on both sides are energized, and the pressure oil flows through the lifting directional valves into the rodless chamber of the liftable-axle suspension cylinder 13, driving the suspension cylinder to extend and thereby lowering the axle. After the liftable axle is lowered to the ground, the lifting directional valves 4 are de-energized, and the lifting-lowering directional valve 12 is de-energized and reset to the neutral position.

Next, the through-flow directional valve 10 is shifted to the communicating position, so that the rodless chamber of the liftable-axle suspension cylinder 13 communicates with the rodless chamber of other cylinders on the same side, thereby completing the lowering operation.

In a specific implementation of this embodiment, the lifting-lowering directional valve 12 is a three-position four-way directional valve with a center-Y function, preferably a three-position four-way solenoid-operated directional valve.

In a specific implementation of this embodiment, the pilot-operated check valve 11 may be replaced with a solenoid-operated directional valve, an air-operated valve, or a solenoid-operated directional valve with one-way shutoff, or may be replaced with a solenoid-operated directional valve with two-way shutoff.

### Embodiment 3

The connection position of the through-flow directional valve 10 or the pipeline connection manner in the hydropneumatic suspension system is changed to change the number of liftable axles or to transfer the axle lifting-lowering function to other axles. As shown in FIG. 4, Embodiment 3 differs from Embodiment 2 in that: in Embodiment 2, there is only one pair of liftable-axle suspension cylinders 13 (that is, the leftmost suspension cylinders are liftable-axle suspension cylinders 13, and the remaining two pairs are non-liftable-axle suspension cylinders 9). By contrast, in Embodiment 3, there are 2 pairs of liftable-axle suspension cylinders 13 (that is, both the leftmost and rightmost suspension cylinders are liftable-axle suspension cylinders 13, and the middle suspension cylinders are non-liftable-axle suspension cylinders 9). Specific technical solutions are as follows:

The through-flow directional valve 10 is disposed in a communication line between the rodless chamber of the leftmost suspension cylinder and the rodless chamber of the middle suspension cylinder, and the rodless chamber of the rightmost suspension cylinder is directly connected to the rodless chamber of the leftmost suspension cylinder by a pipeline.

Embodiments 1 to 3 each illustrate a hydropneumatic suspension system in which one suspension group includes three axles. However, this application is also applicable to multi-axle vehicles with another number of axles.

### Embodiment 4

A vehicle disclosed in this application includes the hydropneumatic suspension system described above. The hydropneumatic suspension system not only enables simultaneous lifting and lowering of the cylinders on one side or both sides of the vehicle body, and overall lifting of all axles within one suspension group in an outrigger-supported state, but also enables lifting of a single axle so that the vehicle can travel with one less axle, as well as lifting of a single axle in an outrigger-supported state, thereby meeting the user requirement of lifting and lowering individual axles and improving user satisfaction.

It is noted that the relational terms herein such as "first" and "second" are used merely to differentiate one entity or operation from another, but do not involve or imply any actual relationship or sequence between the entities or operations. Moreover, the terms "include", "comprise", and any variation thereof are intended to cover a non-exclusive inclusion relationship by which a process, method, object, or device that includes or comprises a series of elements not only includes such elements, but also includes other elements not expressly specified or also includes inherent elements of the process, method, object, or device. Unless otherwise specified in the context, reference to a process, method, object, or device that "includes" or "comprises" a specific number of elements does not exclude other identical or equivalent elements existent in the process, method, object, or device.

Although some embodiments of this application have been shown and described above, a person of ordinary skill in the art understands that variations, modifications, substitutions, and derivations may be made to the embodiments without departing from the principles and essence of this application. The scope of this application is subject to the claims appended hereto and the equivalents thereof.

## Claims

1. A hydropneumatic suspension system, comprising an oil pump and a hydraulic tank, **characterized in that**: the hydropneumatic suspension system further comprises a suspension cylinder, a lifting directional valve, a lowering directional valve, an elastic-rigid switching valve, and an overall lifting directional valve that are symmetrically arranged on two sides of an axle; a P-port of the lifting directional valve and a P-port of the overall lifting directional valve are connected to a pressure line of the hydropneumatic suspension system separately, and another port of the lifting directional valve is connected to a rodless chamber of the suspension cylinder; another port of the overall lifting directional valve is connected to a rod chamber of the suspension cylinder; a T-port of the lowering directional valve is connected to the hydraulic tank, and another port of the lowering directional valve is connected to the rodless chamber of the suspension cylinder; the elastic-rigid switching valves are connected to a rodless chamber of the suspension cylinder on one side and a rod chamber of the suspension cylinder on the opposite side respectively; the lifting directional valve is configured to control communication between the rodless chamber of the suspension cylinder and the oil pump, and when the lifting directional valve is energized, all suspension cylinders on the same side are extended; the lowering directional valve is configured to control communication between the rodless chamber of the suspension cylinder and the hydraulic tank, and when the lowering directional valve is energized, all suspension cylinders on the same side are retracted; and when the lifting directional valves or the lowering directional valves on both sides are energized simultaneously, an entire vehicle body is lifted or lowered.

2. The hydropneumatic suspension system according to claim 1, **characterized in that**: the hydropneumatic suspension system further comprises 2 through-flow directional valves that are symmetrically arranged on two sides of an axle; the suspension cylinder comprises a liftable-axle suspension cylinder and a non-liftable-axle suspension cylinder; a corresponding axle connected to the liftable-axle suspension cylinder is able to be lifted and lowered when a corresponding axle connected to the non-liftable-axle suspension cylinder remains stationary; and the through-flow directional valve is disposed on a communication line between the rodless chamber of the liftable-axle suspension cylinder and the rodless chamber of the non-liftable-axle suspension cylinder, and is configured to block the rodless chamber of the non-liftable-axle suspension cylinder.

3. A hydropneumatic suspension system, comprising an oil pump and a hydraulic tank, **characterized in that**: the hydropneumatic suspension system further comprises a suspension cylinder, a lifting directional valve, a lowering directional valve, an elastic-rigid switching valve, a lifting-lowering directional valve, and a pilot-operated check valve that are symmetrically arranged on two sides of an axle; a P-port of the lifting directional valve and a P-port of the lifting-lowering directional valve are connected to a pressure line of the hydropneumatic suspension system separately, and another port of the lifting directional valve is connected to a rodless chamber of the suspension cylinder; a T-port of the lowering directional valve is connected to the hydraulic tank, and another port of the lowering directional valve is connected to the rodless chamber of the suspension cylinder; the elastic-rigid switching valves are connected to a rodless chamber of the suspension cylinder on one side and a rod chamber of the suspension cylinder on the opposite side respectively; a T-port of the lifting-lowering directional valve is connected to the hydraulic tank; 2 pilot-operated check valves are provided and connected in parallel, and the 2 parallel-connected pilot-operated check valves are connected in series between the rod chamber of each suspension cylinder and the lifting-lowering directional valve; the lifting directional valve is configured to control communication between the rodless chamber of the suspension cylinder and the oil pump, and when the lifting directional valve is energized, all suspension cylinders on the same side are extended; the lowering directional valve is configured to control communication between the rodless chamber of the suspension cylinder and the hydraulic tank, and when the lowering directional valve is energized, all suspension cylinders on the same side are retracted; and when the lifting directional valves or the lowering directional valves on both sides are energized simultaneously, an entire vehicle body is lifted or lowered.

4. The hydropneumatic suspension system according to claim 3, **characterized in that**: the hydropneumatic suspension system further comprises 2 through-flow directional valves that are symmetrically arranged on two sides of an axle; the suspension cylinder comprises a liftable-axle suspension cylinder and a non-liftable-axle suspension cylinder; a corresponding axle connected to the liftable-axle suspension cylinder is able to be lifted and lowered when a corresponding axle connected to the non-liftable-axle suspension cylinder remains stationary; and the through-flow directional valve is disposed on a communication line between the rodless chamber of the liftable-axle suspension cylinder and the rodless chamber of the non-liftable-axle suspension cylinder, and is configured to block the rodless chamber of the non-liftable-axle suspension cylinder.

5. The hydropneumatic suspension system according to claim 1 or 3, **characterized in that** the hydropneumatic suspension system further comprises a first relief valve, an inlet of the first relief valve is connected to an outlet of the oil pump, and the outlet is connected to the hydraulic tank and is configured to stabilize pressure of the hydropneumatic suspension system.

6. The hydropneumatic suspension system according to claim 1 or 3, **characterized in that** the hydropneumatic suspension system further comprises 2 second relief valves that are symmetrically arranged on two sides of the axle, the second relief valve on each side is disposed between the T-port of the lowering directional valve on that side and the accumulator on that side, and is configured to provide overpressure protection for a fluid chamber of the accumulator on that side.

7. The hydropneumatic suspension system according to claim 1 or 3, **characterized in that** the hydropneumatic suspension system further comprises 2 accumulators that are symmetrically arranged on two sides of the axle, the accumulator on each side is continuously connected to the rod chamber of the suspension cylinder on the opposite side, and is configured to absorb vibration transmitted from a road surface to the suspension system, mitigate pressure shocks, and maintain pressure to keep the axle lifted off the ground.

8. The hydropneumatic suspension system according to claim 2 or 4, **characterized in that** the through-flow directional valve is a two-position two-way directional valve with one-way shutoff when de-energized.

9. The hydropneumatic suspension system according to claim 1 or 3, **characterized in that** the lifting directional valve and the lowering directional valve are two-position two-way solenoid-operated directional valves with either one-way or two-way shutoff, and the elastic-rigid switching valve is a two-position two-way air-operated directional valve with two-way shutoff.

10. A vehicle, **characterized in that** the vehicle comprises the hydropneumatic suspension system according to any one of claims 1 to 4.
